(19) Europäisches Patentamt
European Patent Office
Office européen des brevets

(11) **EP 1 397 646 B1**

(12) **EUROPÄISCHE PATENTSCHRIFT**

(45) Veröffentlichungstag und Bekanntmachung des Hinweises auf die Patenterteilung:
**25.07.2007 Patentblatt 2007/30**

(51) Int Cl.:
*G01D 5/36* *(2006.01)* *G01D 18/00* *(2006.01)*
*H04N 5/217* *(2006.01)*

(21) Anmeldenummer: **02740643.8**

(22) Anmeldetag: **23.05.2002**

(86) Internationale Anmeldenummer:
**PCT/EP2002/005685**

(87) Internationale Veröffentlichungsnummer:
**WO 2002/099687 (12.12.2002 Gazette 2002/50)**

(54) **VERFAHREN UND COMPUTERPROGRAMM ZUR AUSWERTUNG VON DURCH MESSGERÄTE AUFGENOMMENEN DATEN**

METHOD AND COMPUTERPROGRAM FOR EVALUATION OF DATA RECORDED BY MEASURING INSTRUMENTS

PROCEDE ET PROGRAMME D'ORDINATEUR PERMETTANT D'EVALUER DES DONNEES ENREGISTREES PAR DES APPAREILS DE MESURE

(84) Benannte Vertragsstaaten:
**DE FR GB IT**

(30) Priorität: **28.05.2001 DE 10127239**

(43) Veröffentlichungstag der Anmeldung:
**17.03.2004 Patentblatt 2004/12**

(73) Patentinhaber: **Dr. Johannes Heidenhain GmbH**
**83301 Traunreut (DE)**

(72) Erfinder:
• **TRAUTWEIN, Uwe**
**98708 Gehren (DE)**
• **VOGLER, Fred**
**98704 Langewiesen (DE)**

(74) Vertreter: **Hengelhaupt, Jürgen et al**
**Wallstrasse 58/59**
**10179 Berlin (DE)**

(56) Entgegenhaltungen:
EP-A- 0 439 912     GB-A- 1 549 168
GB-A- 2 149 260     US-A- 3 800 079
US-A- 5 734 172

**Beschreibung**

Die Erfindung betrifft ein Verfahren und ein Computerprogrammprodukt zur Auswertung von durch Meßgeräte aufgenommenen Daten, welche insbesondere zur genauen Lokalisierung von nichtreflektierenden Marken auf einem reflektierenden Medium mittels eines lichtempfindlichen Empfängers anwendbar sind und speziell in Präzisions-Positioniereinrichtungen eingesetzt werden können.

In der Signalverarbeitung existiert ein Vielzahl von Verfahren um Kanten oder Spitzen in einem Signalverlauf zu detektieren. Diese beinhalten meist komplizierte Verarbeitungsvorschriften, welche Probleme bei der Implementierung auf einem Mikrorechnersystem mit begrenzten Ressourcen bereiten.

Darüber hinaus gestatten diese Verfahren lediglich die Bestimmung der relativen Markenposition, indem die detektierten Signale in der Empfängerebene ausgewertet werden. Positionen mehrerer nichtreflektierender Marken auf einem reflektierenden Medium können so mit ausreichender Genauigkeit zwar relativ zueinander bestimmt werden; die absolute Lageposition der Marken jedoch konnte für hohe Genauigkeit bisher nicht direkt aus den zur Verfügung stehenden (optischen) Meßsignalen ermittelt werden.

Aus der US-A-3800079 ist ein Verfahren zur optischen Detektion von Marken bekannt.

Aufgabe der vorliegenden Erfindung ist es, die Nachteile der bekannten Auswertungsverfahren zu beheben und ein optimiertes Verfahren zur exakten Lokalisation eines Signals (Spitze) bereitzustellen.

Diese Aufgabe wird erfindungsgemäß gelöst durch das Verfahren nach Anspruch 1 und die Anordnung nach Anspruch 6. Zweckmäßige Ausgestaltungen der Erfindung sind in den abhängigen Ansprüchen enthalten.

Ein besonderer Vorteil der Erfindung liegt darin, daß bei dem Verfahren zur Auswertung von durch Meßgeräte aufgenommenen Daten in einem ersten Schritt die von dem (den) Sensor(en) des (der) Meßgeräte (s) bei minimiertem oder ausgelöschtem Meßsignal gelieferten Daten aufgenommen und als Dunkelkurve abgespeichert, in einem zweiten Schritt Daten eines normierten Meßsignals aufgenommen und als Referenzkurve abgespeichert, in einem dritten Schritt die Daten der eigentliche Messung aufgenommen und als Merkmalskurve 6 gespeichert werden, nachfolgend die Merkmalskurve 6 durch Verrechnung mit Dunkelkurve und/oder Referenzkurve von meßgerätebedingten Fehlern bereinigt und/oder normiert und die so bearbeitete Merkmalskurve als Zielkurve gespeichert und abschließend die Zielkurve für verschiedene Werte des Meßsignals ausgewertet wird.

Das Computerprogrammprodukt zur Auswertung von durch Meßgeräte aufgenommenen Daten zeichnet sich dadurch aus, daß es direkt in den internen Speicher eines digitalen Computers geladen werden kann und Softwarecodeabschnitte umfaßt, mit denen die Schritte gemäß Anspruch 1 ausgeführt werden, wenn das Produkt auf einem Computer läuft.

Ein weiterer Vorteil des Computerprogrammprodukts liegt darin, daß es auf mindestens einem computergeeigneten Medium gespeichert ist und folgendes umfaßt:

computerlesbare Programmittel, die einen Computer und/oder Mikrocontroller veranlassen, von einem Meßgerät aufgenommene Daten zu erfassen und abzuspeichern;

computerlesbare Programmittel, die einen Computer und/oder Mikrocontroller veranlassen, die erfaßten und

abgespeicherten Daten zur Fehlerbereinigung und/oder Normierung miteinander zu verrechnen

Das erfindungsgemäße Verfahren ermöglicht es, mit minimalem technischen Aufwand die Lokalisation einer Marke mit hoher Präzision zu erreichen. Dazu werden folgende Schritte ausgeführt: Vorbereitung (Kalibrierung), Normierung, Auswertung der Zielkurve für spezielle Werte des Meßsignals (Mittelwertbildung zur Bestimmung der Pixelposition). Die Kombination aller dieser Schritte des erfindungsgemäßen Verfahrens liefert die erforderliche hohe Auflösung bei der Markenpositionsbestimmung. (Wenn nur eine geringe Auflösung erforderlich ist, können gegebenenfalls einzelne Schritte weggelassen werden.) Darüber hinaus ist die Abarbeitung des Verfahrens durch die relativ einfachen Rechenoperationen bereits auf kleinen Rechnersystemen möglich.

Die Erfindung soll nachstehend anhand von zumindest teilweise in den Figuren dargestellten Ausführungsbeispielen näher erläutert werden.

Es zeigen:

Fig. 1      Schematische Darstellung der Geräteanordnung zur Durchführung des Verfahrens,

Fig. 2a      Merkmalskurve 6: Intensitätsverteilung der am Medium reflektierten Strahlung auf der Empfängerfläche,

Fig. 2b      Kurve der Intensitätsverteilung nach Bereinigung der Merkmalskurve 6 von der sog. Dunkelkurve (s. u.),

Fig. 2c      Kurve der Intensitätsverteilung der sog. Hellkurve (s. u.) nach Bereinigung von der Dunkelkurve,

Fig. 2d      Kurve der normierten Intensitätsverteilung,

Fig. 3      Darstellung zur Verdeutlichung der Ermittlung der Markenposition (Pixel-Nr.) durch Auswertung verschiedener Werte des Meßsignals (Mittelwertbildung),

Fig. 4      Skizze zur Erläuterung der Berechnungsvorschrift für die Ermittlung der Markenposition.

Am Beispiel der Detektion eines Markenabbildes im Signalverlauf einer optischen Abbildung wird eine Ausführungsvariante des Verfahrens demonstriert.

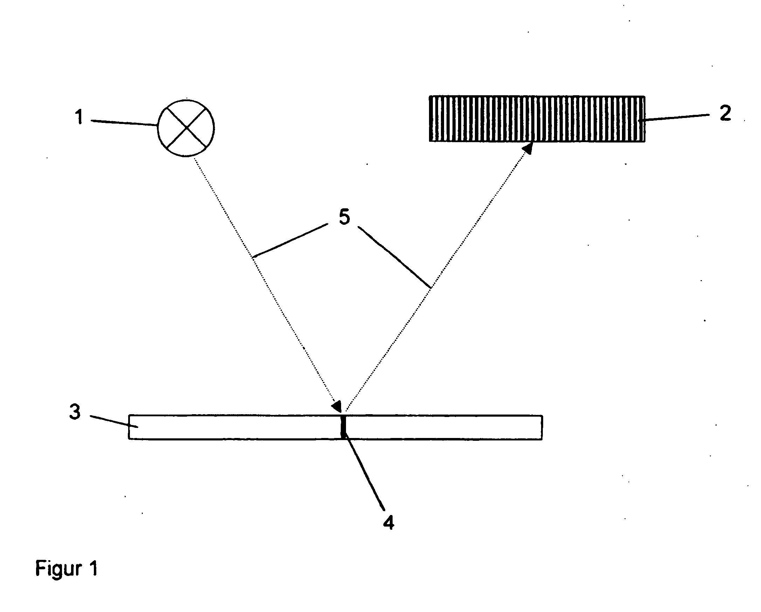

Eine mögliche Vorrichtung zur Durchführung des erfindungsgemäßen Verfahrens wird durch eine Kombination aus Lichtquellen 1 und einem lichtempfindlichen Empfänger 2 oder Empfängerfeld (als Modul) realisiert, die über einem reflektierenden Maßstab 3 mit nichtreflektierenden Marken 4 angeordnet sind (vgl. Figur 1). Dabei sind die einzelnen Komponenten so angeordnet, daß der reflektierende Maßstab 3 von den Lichtquellen 1 bestrahlt wird und die am Maßstab 3 reflektierte Strahlung von dem Empfänger 2 bzw. Empfängerfeld erfaßt wird. Durch diese Anordnung der Elemente ist eine optische Abbildung der Marken auf den reflektierenden Maßstab 3 durch das Strahlenfeld 5 der Lichtquellen 1 auf den lichtempfindlichen Empfänger 2 gewährleistet.

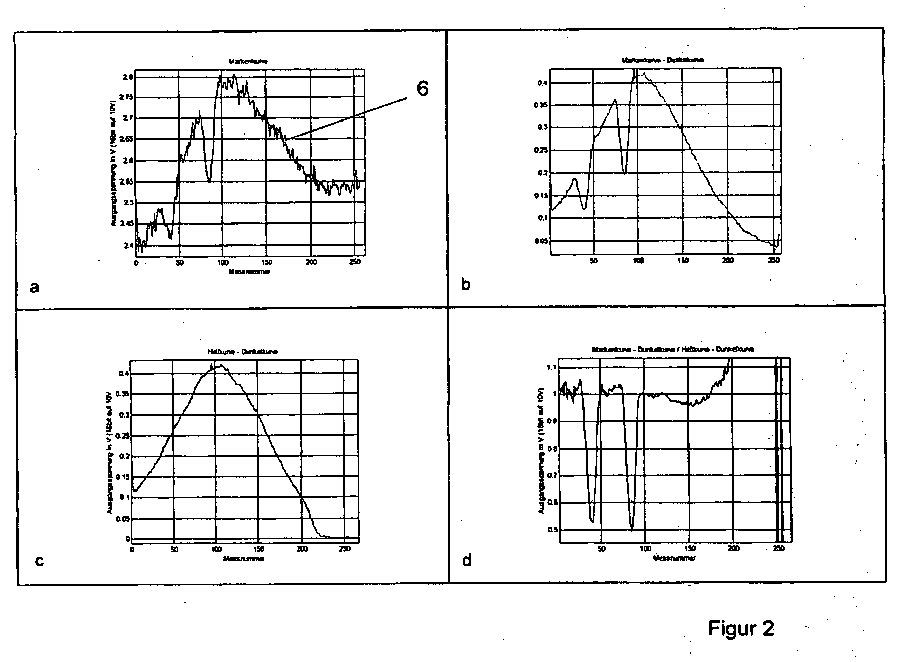

Der vom reflektierenden Maßstab 3 reflektierte Intensitätsverlauf enthält Informationen in Form von Signaleinbrüchen, welche die Position der Marken 4 in Bezug zum lichtempfindlichen Empfänger 2 darstellen. Damit entsteht in der Empfängerebene ein signifikanter Intensitätsverlauf, Merkmalskurve 6 genannt, welcher die Markenpositionen enthält (siehe Figur 2a).

Mittels einer speziellen Berechnungsvorschrift zur Markendetektion wird aus diesem Intensitätsverlauf der Merkmalskurve 6 die relative Lage der Marken 4 in der Empfängerebene ermittelt.

Diese relative Markenpositionen muß nun in die absolute Position der Marke 4 in der Maßstabsebene transformiert werden. Als Voraussetzung für die Abarbeitung der nachfolgenden Verfahrensschritte ist die Kenntnis der Dunkelkurve und der Referenzkurve, welche im speziellen Falle der Markendetektion mittels optischem Detektor als Hellkurve bezeichnet werden soll, erforderlich.

Die Dunkelkurve repräsentiert die unterschiedlichen Dunkelsignale über die einzelnen Detektionsorte eines lichtempfindlichen Empfängers 2. Sie wird also bei minimiertem Meßsignal - hier die Intensität der reflektierten Strahlung - aufgenommen; idealerweise sollte das Meßsignal bei der Aufzeichnung der Dunkelkurve ausgelöscht sein. Diese Daten sind wichtig, da, bedingt durch die unterschiedlichen Wandlungseigenschaften des lichtempfindlichen Empfängers 2 oder der Empfängerzeile die aufgenommenen Intensitätssignale streuen. Die Dunkelkurve beschreibt also das Offsetverhalten des Empfängers 2.

In Abhängigkeit von der Lichtquelle 1 muß eine weitere Korrektur der Merkmalskurve 6 vorgenommen werden. Wird z. B. der reflektierende Metallmaßstab 3 mit einer punktförmigen Lichtquelle 1 beleuchtet, so ist das zurückgeworfene Strahlbild auf dem lichtempfindlichen Empfänger 2 oder Empfängerzeile gekennzeichnet durch die Divergenz des Strahlenbündels bzw. dem Abstand zwischen Lichtquelle 1, Metallmaßstab 3 und Empfänger 2. Zu erkennen ist dies am Randabfall der empfangenen Signale. Die Hellkurve beinhaltet somit den Intensitätsverlauf in der Empfängerebene ohne nichtreflektierende Marken 4. Diese Kurve ist bestimmt durch die Abstrahlcharakteristik des Strahlers, die Empfängereigenschaften (Licht in ein elektrisches Signal zu wandeln), die Reflexionseigenschaften des Maßstabes 3 und der Marken.

Um die Auswertung der erfaßten Meßwerten, die durch die Merkmalskurve 6 repräsentiert werden, zu optimieren, bedarf es einer Normierung. Diese wird erreicht, indem vom Intensitätsverlauf der Merkmalskurve 6 die Dunkelkurve abgezogen wird. Das Ergebnis - die Merkmalskurve-Dunkelkurve - ist in Figur 2b dargestellt. Von der Hellkurve wird nun die Dunkelkurve ebenfalls abgezogen, was als Ergebnis die Hellkurve-Dunkelkurve ergibt (Fig. 2c), anschließend wird die vorher ermittelten Merkmalskurve-Dunkelkurve durch die Hellkurve-Dunkelkurve dividiert und es entsteht ein Kurvenverlauf (siehe Figur 2d), welcher die Auswertung der Meßwerte erlaubt im Gegensatz zur unbehandelten Merkmalskurve 6. Diese normierte Kurve dient der folgenden Ermittlung der relativen Markenpositionen in der Empfängerebene als Grundlage.

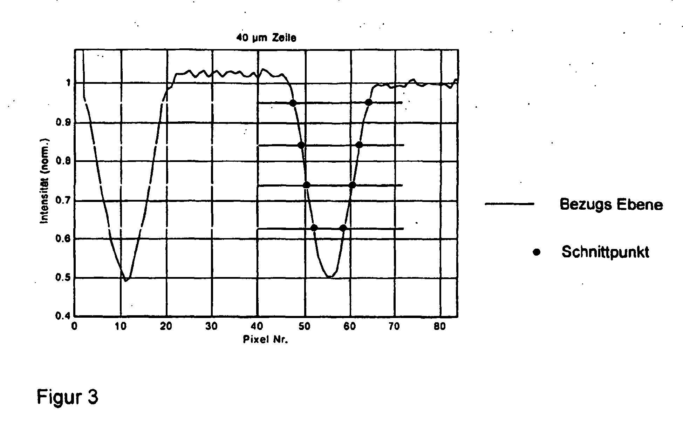

Hierzu werden in bestimmten Bezugsebenen, die für vorgegebene Intensitätswerte durch den Verlauf der normierten Kurve gelegt werden, die Schnittpunkte mit dem normierten Intensitätsverlauf bestimmt (siehe Figur 3). Für das Ausführungsbeispiel werden als Maß für die relative Markenposition die Pixel der Empfängerebene verwendet. Der Mittelwert aller Pixelwerte der Schnittpunkte ergibt die Markenposition in der Empfängerebene für eine Marke 4.

Anschließend, im Anschluß an das erfindungsgemäße Verfahren, erfolgt die Umrechnung in die genaue absolute Position der Marke 4 in der Maßstabsebene. Durch die Projektion der Markenabbilder in die Empfängerebene kommt es zu einer Transformation der Markenposition. Dies kann aber korrigiert werden.

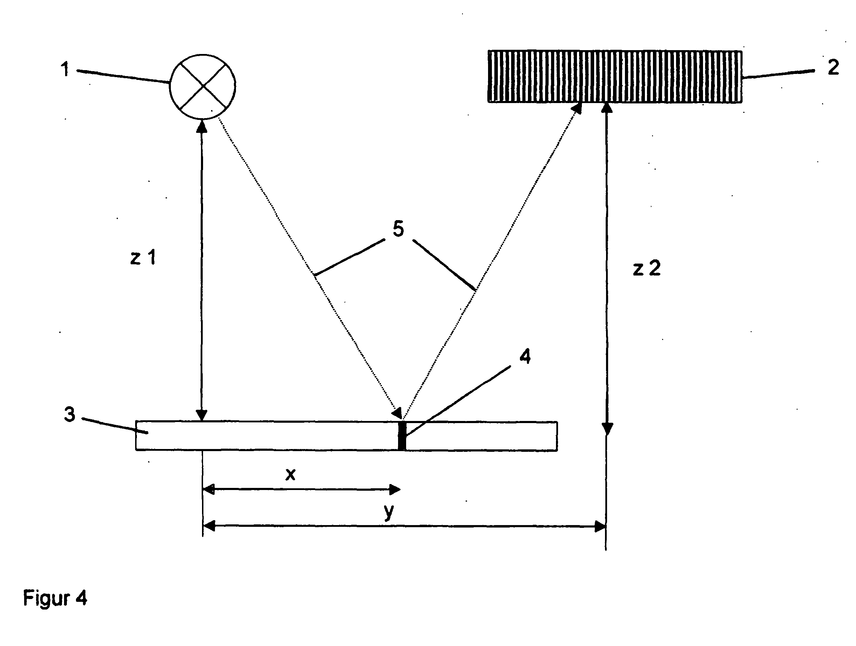

Aus der Kenntnis über den Abstand $z_2$ zwischen der Empfängerebene und Maßstab 3 wird über den Strahlensatz die Position x der Marke 4 in Bezug zur Senkrechten von der Lichtquelle 1 auf den Maßstab 3 aus der Markenposition y in der Empfängerebene ermittelt (siehe Figur 4). Es ergibt sich somit die Berechnungsvorschrift vereinfacht zu:

```
x = y * z1 / (z1 + z2).
```

Um neben der absoluten Position der Marken gegebenenfalls noch weitere Informationen zu übermitteln, könnten die Marken auch in Form eines Strichcodes (Barcodes) strukturiert sein.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen. Der Rahmen der Erfindung ist von den Ansprüchen definiert.

**Bezugszeichenliste**

1. Lichtquelle
2. lichtempfindlicher Empfänger
3. reflektierender Maßstab
4. nichtreflektierende Marke
5. Strahlenfeld
6. Merkmalskurve

**Patentansprüche**

1. Verfahren zur Bestimmung der Position eines Markenabbildes in einem von durch optische Sensoren gewonnenen Meßsignal zur Detektion von Marken auf einem Maßstab, wobei die von den optischen Sensoren bei minimiertem oder ausgelöschtem Meßsignal gelieferten Daten aufgenommen und als Dunkelkurve abgespeichert, die Daten eines normierten Meßsignals aufgenommen und als Referenzkurve abgespeichert, die Daten der eigentliche Messung aufgenommen und als Merkmalskurve gespeichert werden und anschließend die Merkmalskurve durch Verrechnung mit Dunkelkurve und/oder Referenzkurve von meßgerätebedingten Fehlern bereinigt und/oder normiert und die so bearbeitete Merkmalskurve als Zielkurve gespeichert wird, **dadurch gekennzeichnet, dass** zur Markierung des Maßstabs (3) Marken (4) verwendet werden und die Auswertung des Meßsignals erfolgt, indem für vorgebbare Intensitätswerte der Zielkurve die Schnittpunkte der Zielkurve mit den durch die Intensitätswerte bestimmten Intensitätsebenen ermittelt werden und aus den ermittelten Schnittpunkten ein die Position eines Markenabbildes repräsentierender Mittelwert gebildet wird oder die ermittelten Schnittpunkte zu Gruppen zusammengefaßt und dann für jede Gruppe aus den zugehörigen Schnittpunkten ein die Position eines Markenabbildes repräsentierender Mittelwert gebildet wird.

2. Verfahren nach Anspruch 1, **dadurch gekennzeichnet, dass** die Bereinigung von meßgerätebedingten Fehlern dadurch erfolgt, daß die Dunkelkurve von der Merkmalskurve (6) subtrahiert wird.

3. Verfahren nach einem der Ansprüche 1 oder 2, **dadurch gekennzeichnet, dass** die Normierung dadurch erfolgt, daß der Quotient aus der von meßgerätebedingten Fehlern bereinigten Merkmalskurve (6) und der Referenzkurve gebildet wird.

4. Verfahren nach einem der vorhergehenden Ansprüche, **dadurch gekennzeichnet, dass** aus die Position eines Markenabbildes repräsentierenden Mittelwerten absolute Markenpositionen x in Bezug zu der von der Lichtquelle (1) auf den Maßstab (3) gefällten Senkrechten gemäß

$$x = y * z_1 / (z_1 + z_2)$$

berechnet werden, wobei y die Markenposition in der Empfängerebene in Bezug zu der von der Lichtquelle (1) auf den Maßstab (3) gefällten Senkrechten, $z_1$, den Abstand zwischen Maßstab (3) und Lichtquelle (1) und $z_2$ den Abstand zwischen der Empfängerebene und Maßstab (3) beschreiben.

5. Verfahren nach einem der vorhergehenden Ansprüche, **dadurch gekennzeichnet, dass** ein reflektierender Maßstab (3) und eine nichtreflektierende Marke (4) verwendet wird.

6. Anordnung mit mindestens einem Prozessor, welcher derart eingerichtet ist, dass ein Verfahren zur Bestimmung der Position eines Markenabbildes in einem von durch optische Sensoren gewonnenen Meßsignals gemäß einem der Ansprüche 1 bis 5 durchführbar ist.

7. Anordnung nach Anspruch 6, **dadurch gekennzeichnet, dass** mindestens eine Lichtquelle (1), mindestens ein lichtempfindlicher Empfänger (2) und ein reflektierender Maßstab (3) derart angeordnet sind, daß der reflektierende Maßstab (3) von der mindestens einen der Lichtquelle (1) bestrahlbar und die am reflektierenden Maßstab (3) reflektierte Strahlung von dem mindestens einen Empfänger (2) erfaßbar ist.

8. Anordnung nach Anspruch 6 oder 7, **dadurch gekennzeichnet, dass** der reflektierende Maßstab. (3) nichtreflektierende Marken (4) aufweist.

**Claims**

1. A method for the highly precise determination of the position of a mark pattern in a measured signal obtained by optical sensors for the detection of marks on a scale, wherein data supplied by the optical sensors with a minimized or extinguished measured signal are recorded and stored as a dark curve, the data of a normalized measured signal are recorded and stored as a reference curve, the data of the current measurement are recorded and are stored as a characteristic curve, and then the characteristic curve is purged of errors caused by the measuring instrument by comparison with the dark curve and/or the reference curve and/or is normalized, and the thus-treated characteristic curve is stored as the target curve, is hereby **characterized in that** marks are used for the labeling of the scale and the measured signal is evaluated by determining the points of intersection of the target curve with the intensity levels determined by the intensity values for intensity values of the target curve that can be given in advance, and forming a mean value representing the position of a mark pattern from the determined points of intersection or combining the determined intersection points into groups and then forming a mean value representing the position of a mark pattern for each group from the intersection points belonging thereto.

2. The method according to claim 1, further **characterized in that** the purging of errors caused by the measuring instrument is conducted by subtracting the dark curve from the characteristic curve.

3. The method according to one of claims 1 to 2, further **characterized in that** the normalization is conducted by forming the quotient from the characteristic curve purged of errors caused by the measuring instrument and the reference curve.

4. The method according to one of claims 1 to 2, further **characterized in that** from the position of mean values representing a mark pattern absolute mark positions x referred to the perpendicular line erected from the light source to the scale are calculated according to x=y*z.sub.1/(z.sub.1+z.sub.2), wherein y describes the mark position in the receiver plane referred to the perpendicular line erected from the light source to the scale, z.sub.1 describes the distance between the scale and light source and z.sub.2 describes the distance between the receiver plane and the scale.

5. The method according to one of claims 1 to 2, further **characterized in that** a reflecting scale and a non-reflecting mark are used.

6. An arrangement with at least one processor, which is aligned such that a method for the highly precise determination of the position of a mark pattern in a measured signal obtained by optical sensors can be conducted according to one of claims 1 to 2.

7. The arrangement according to claim 6, further **characterized in that** at least one light source, at least one light-sensitive receiver and a reflecting scale are arranged such that the reflecting scale can be irradiated from the at least one light source and the light reflected at the reflecting scale can be detected by the at least one receiver.

8. The arrangement according to claim 6, further **characterized in that** the reflecting scale has non-reflecting marks.

## Revendications

1. Procédé de détermination de la position d'une image de marque dans un signal de mesure obtenu par des capteurs optiques, permettant de détecter des marques sur une échelle, dans lequel les données fournies par les capteurs optiques en cas de signal de mesure affaibli ou effacé sont enregistrées et mises en mémoire sous forme de courbe foncée, et dans lequel les données relatives à un signal de mesure normalisé sont enregistrées et mises en mémoire sous forme de courbe de référence, et dans lequel les données relatives à la mesure effective sont enregistrées et mises en mémoire sous forme de courbe caractéristique, la courbe caractéristique étant ensuite débarrassée d'erreurs dues aux appareils de mesure et/ou normalisée par compensation avec la courbe foncée et/ou la courbe de référence, et la courbe caractéristique ainsi traitée étant mise en mémoire sous forme de courbe cible,
   **caractérisé en ce que**
   des marques (4) sont utilisées pour marquer l'échelle (3) et **en ce que** l'évaluation du signal de mesure s'effectue en déterminant pour des valeurs d'intensité prédéterminées de la courbe cible les points d'intersection de la courbe cible avec les plans d'intensité définis par les valeurs d'intensité, et en établissant une valeur moyenne représentant la position d'une image de marque à partir des points d'intersection qui ont été déterminés, ou en réunissant les points d'intersection qui ont été déterminés en groupes, une valeur moyenne représentant la position d'une image de marque étant ensuite établie pour chaque groupe à partir des points d'intersection associés.

2. Procédé selon la revendication 1,
   **caractérisé en ce que**
   la correction d'erreurs dues aux appareils de mesure s'effectue en soustrayant la courbe foncée de la courbe caractéristique (6).

3. Procédé selon l'une des revendications 1 ou 2,
   **caractérisé en ce que**
   la normalisation s'effectue en formant le quotient de la courbe caractéristique (6) débarrassée d'erreurs dues aux appareils de mesure et de la courbe de référence.

4. Procédé selon l'une des revendications précédentes,

**caractérisé en ce qu'**

à partir de valeurs moyennes représentant la position d'une image de marque, des positions x de marque absolues sont calculées par rapport à la perpendiculaire abaissée de la source lumineuse (1) sur l'échelle (3) selon

$$x = y * z_1 / (z_1 + z_2),$$

y décrivant la position de marque dans le plan récepteur par rapport à la perpendiculaire abaissée de la source lumineuse (1) sur l'échelle (3), $z_1$ décrivant la distance entre l'échelle (3) et la source lumineuse (1), et $z_2$ décrivant la distance entre le plan récepteur et l'échelle (3).

5. Procédé selon l'une des revendications précédentes,
   **caractérisé en ce qu'**
   une échelle réfléchissante (3) et une marque non réfléchissante (4) sont utilisées.

6. Dispositif comportant au moins un processeur qui est conçu de telle sorte qu'un procédé de détermination de la position d'une image de marque dans un signal de mesure obtenu par des capteurs optiques selon l'une des revendications 1 à 5 peut être exécuté.

7. Dispositif selon la revendication 6,
   **caractérisé en ce qu'**
   au moins une source lumineuse (1), au moins un récepteur photosensible (2) et une échelle réfléchissante (3) sont disposés de telle sorte que l'échelle réfléchissante (3) peut être éclairée par l'au moins une source lumineuse (1) et que le rayonnement réfléchi au niveau de l'échelle réfléchissante (3) peut être reçu par l'au moins un récepteur (2).

8. Dispositif selon la revendication 6 ou 7,
   **caractérisé en ce que**
   l'échelle réfléchissante (3) comporte des marques non réfléchissantes (4).

Figur 1

EP 1 397 646 B1

Figur 2

Figur 3

Figur 4

EP 1 397 646 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 3800079 A